# EUROPEAN PATENT APPLICATION

(11) **EP 1 450 249 A1**
(43) Date of publication of application: **25.08.2004**
(21) Application number: 04075422.8
(22) Date of filing: 12.02.2004
(51) Int. Cl.: G06F 3/12, G06F 17/60

(54) **System for processing print jobs in a network**

(30) Priority: 20.02.2003 EP 03075552
(71) Applicant: Océ-Technologies B.V., 5914 CC Venlo (NL)
(72) Inventor: The designation of the inventor has not yet been filed
(74) Representative: Van de Sande, J.H.A.W.

(57) **Abstract**

A system for processing print jobs in a network comprises a plurality of client stations adapted to submit print jobs, and at least one printing device comprising a control unit and a printer. The control unit comprises storage means for storing print jobs submitted to the printing device. In the system a print account job containing account information of a print job is generated and submitted, wherein the print account job is linked to the corresponding print job by a linking identifier. A stored print job is validated for printing when a corresponding valid account job has been received.

## Description

The invention relates to a system for processing print jobs in a network, comprising a plurality of client stations adapted to submit print jobs, and at least one printing device comprising a control unit and a printer, the control unit comprising storage means for storing print jobs submitted to the printing device.

In various applications of systems of this type it is important to submit account information with the print job. This account information specifies information related to the print job, such as the user, the project, the phase of the project, whether the print can be billed, remarks, etc. In the known systems the account information is added to the job ticket. Generally, this allows the user to add only limited account information. Many printing devices are adapted to understand various formats of job tickets. If in a system of the above-mentioned type account information is to be added to the job ticket, this means that all ticket formats that are supported by the printing device must be adapted to accommodate the addition of account information. Moreover, adding account information to print jobs having a job ticket, requires modifying the existing job ticket to insert the account information, which is rather cumbersome.

The invention aims to provide a system of the above-mentioned type wherein account information can be added to the print job in a very flexible manner.

To this end means are provided for generating and submitting a print account job containing account information of a print job, wherein the print account job is linked to the corresponding print job by a linking identifier, and by means for validating stored print jobs for printing, wherein said validating means receives account jobs and validates a corresponding print job for printing in case a valid account job has been received.

In this manner a system is obtained wherein account information is submitted in a print account job which is generated as a second print job linked to the first print job. The print account job contains the account information for the actual print job encoded in a suitable format used by the printing device, such as RCF, OJT or PostScript. The specification of existing job ticket formats does not have to be modified and it is not necessary to modify print jobs having a job ticket.
The invention will be further explained by reference to the drawings showing an example of the system of the invention in a schematical manner.
- Fig. 1: shows a diagram of an embodiment of the system of the invention.
- Fig. 2: show by way of example a user interface window for entering account information in the system of the invention.
- Fig. 3: shows a flow diagram explaining the operation of a client station in the system of the invention.
- Fig. 4: shows a flow diagram explaining the operation of a printing device in the system of the invention.

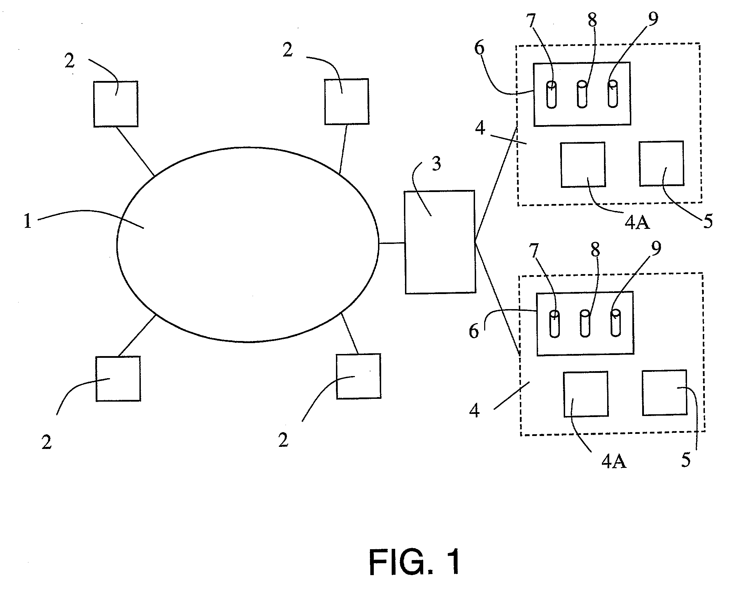

Fig. 1 shows a system for processing print jobs in a network 1 comprising a plurality of client stations or client PC's 2, a print server 3 and two printing devices 4. Each printing device 4 comprises a control unit 4A and a printer 5. The control unit 4A can be implemented as any suitable logic controller or PC including storage means 6 for storing print jobs submitted to the printing device 4. In the embodiment described, the storage means 6 comprises a holding queue 7 for storing print jobs received by the printing device 4 and a printing queue 8 for storing print jobs which are validated and are ready for printing by the printer 5. Further, the storage means 6 comprises a log file 9 for storing account information as will be explained hereinafter.

In the system of the invention as shown in Fig. 1, the client stations 2 are adapted to submit print jobs with corresponding account information to a selected printing device 4. A print job comprises a print data file and a job ticket with printing instructions for the printer 5 of the printing device 4 selected. These printing instructions are for example the number of copies to be printed, paper size, and finishing information.

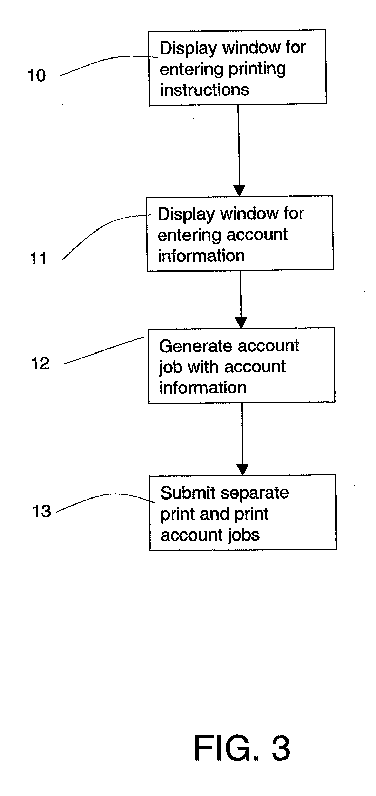

Client stations 2 are adapted to run application programs in a usual manner and at least some of the application programs allow a user to print data files, for example a data file representing a text document or a drawing document. To print a data file, the user enters a print command, and as shown in Fig. 3, in step 10, giving a print command results in a job submitter program running on the client station, e.g. a printer driver, to display a user interface window on the monitor of the client station 2. This window allows the user to enter printing instructions. The printing instructions are inserted in a so called job ticket and the job ticket together with the print data file is submitted to the printing device as a print job.

In step 11 the job submitter displays a second window allowing the user to enter account information and the account information is inserted in a print account job which is submitted by the job submitter to the printing device 4 as a separate second print job. The print job and the print account job are linked by a linking identifier. As in most protocols for submitting print jobs information fields are available for inserting information provided by a user, e.g. the job name field and user name field, these fields can be used for inserting the linking identifier. Preferably the job name is used as linking identifier as the job name field is usually free text. Of course, it is also possible to encode the linking identifier within the job ticket of the print job. However, encoding the linking identifier within the job ticket the print job already has, requires modifying an existing ticket which is a disadvantage.

After entering the account information, the job submitter of the client station 2 generates in step 12 a print account job in the same manner as a print job and this print account job is submitted to the printing device 4 in step 13. It is noted that steps 12 and 13 do not indicate a time sequence. More specifically step 13 does not require that the print job is submitted after generating the print account job. The print job can be submitted before entering the account information.

As mentioned above the print job and the print account job can be linked by the job name and unique code as in the following example:
Lpr "Tulip Bridge overall view - C715"
Lpr "[account info] Tulip Bridge overall view - C715"

In this example the print job and the print account job are submitted via an Lpr command. The printing device 4 is aware of the special prefix [account info] to recognize the print account job as a job providing account information for a corresponding print job having the same job name and unique code. The unique code is only used to ensure that no two print jobs with the same name exist.

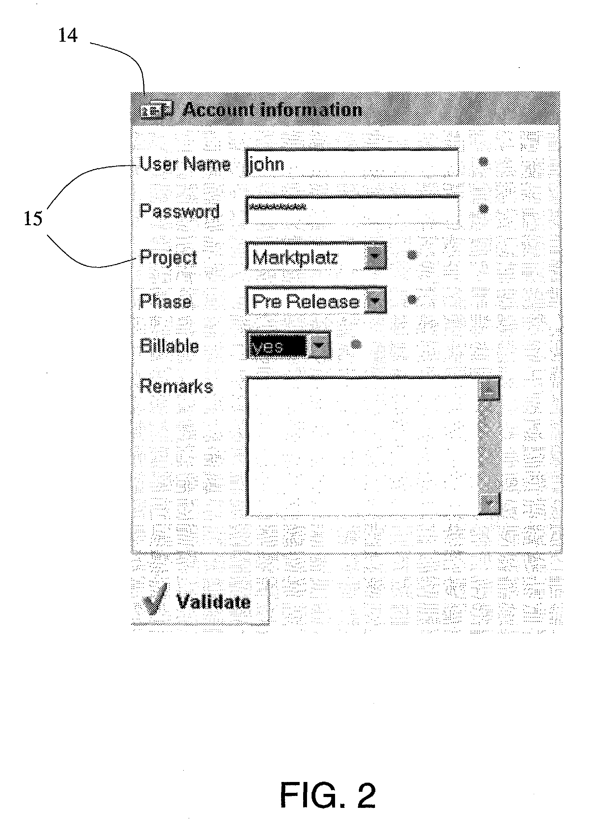

Generating a print account job and submitting this print account job as a separate print job to the printing device 4 allows the user of the system to define the account information which has to be provided in a relatively free and flexible manner. Fig. 2 shows by way of example a window 14 having a number of fields 15 for providing account information. This window 14 is displayed in step 11 of fig. 3 on the monitor of the client station 2.

In a further embodiment of the system of the invention the print server 3 can be programmed to operate as a server station adapted to intercept print jobs submitted to the printing devices 4 connected to the print server 3. If a print job is intercepted and a corresponding print account job is not received, the print server 3 requests the client station 2 which submitted the print job or as an alternative another client station 2 operating for example as an accounting centre, to provide corresponding account information. After receipt of the account information, the print server 3 generates a print account job containing the account information and links this print account job to the corresponding print job, for example by the job name as explained above. Thereafter, the print account job is submitted to the printing device 4. It is noted that the account information can be obtained by the print server 3 for example through presenting a web page on the monitor of the client station 2 in a manner known per se.

As an alternative to obtaining the account information from a client station 2, it is also possible to enter the account information on the print server 3, which account information is submitted to the printing device 4 in the manner described.

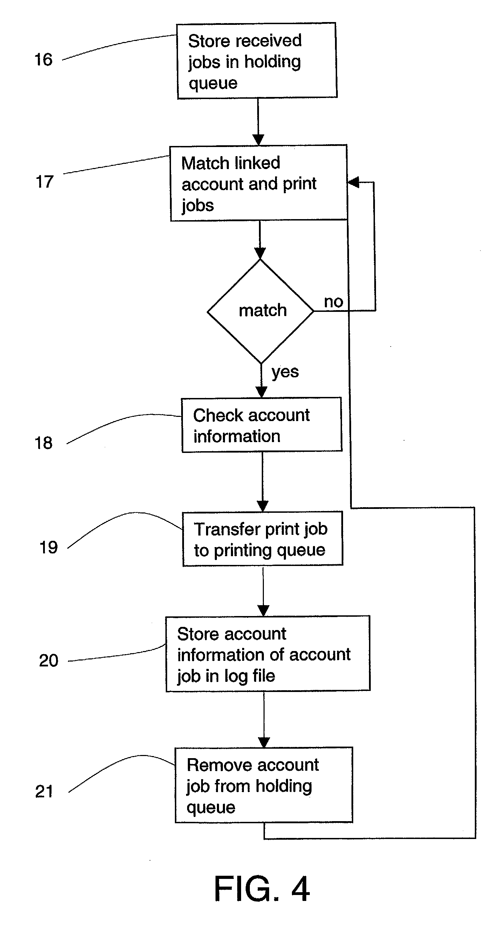

The operation of the printing device 4 will be explained by reference to Fig. 4. In step 16 all received print and print account jobs are stored in the holding queue 7. As mentioned, print account jobs are distinguished from actual print jobs, for example by means of a special prefix [account info]. If a print account job is received, the control unit 4A reads the job name as linking identifier and checks the print jobs in the holding queue 7 to find a print job with a corresponding job name in step 17. If a print account job can be matched with a print job in step 17, the control unit 4A in a next step 18 checks the account information in the print account job and if all account information in the print account job is valid, the corresponding print job is activated and transferred to the printing queue 8 in a next step 19. The account information of the print account job is stored in the account log file 9 in step 20 and in step 21 the print account job is removed from the holding queue 7.

The print jobs in the print queue 8 are printed by the printer 5 in a usual manner.

In another embodiment of the system of the invention the print server 3 can be programmed to receive print account jobs and to operate in a manner corresponding to the operation of the control unit 4A as described. This means that the print server 3 checks the received print account job and validates the corresponding print job if the account information is valid. The print server 3 submits for example a print validation command which results in printing of the corresponding print job. In this embodiment the account log file 9 can be implemented in storage means of print server 3.

It will be understood that the invention described provides a system wherein account information can be added to the print job in a very flexible manner. The account information is submitted to the printing device in a print account job which is generated as a second print job and this second print job is linked to the first print job by a linking identifier which may be the job name. The account job contains the account information for the actual print job encoded in a suitable format used by the printing device, such as RCF, OJT or PostScript.

The invention is not restricted to the above-described embodiments which can be varied in a number of ways within the scope of the claims.

## Claims

1. System for processing print jobs in a network, comprising a plurality of client stations adapted to submit print jobs, and at least one printing device comprising a control unit and a printer, the control unit comprising storage means for storing print jobs submitted to the printing device, **characterized by** means for generating and submitting a print account job containing account information of a print job, wherein the print account job is linked to the corresponding print job by a linking identifier, and by means for validating stored print jobs for printing, wherein said validating means receives account jobs and validates a corresponding print job for printing in case a valid account job has been received.

2. System according to claim 1, wherein a client station comprises a job submitter including said means for generating and submitting print account jobs.

3. System according to claim 1 or 2, wherein a server station is adapted to intercept a submitted print job, said server station comprising means for generating and submitting a print account job containing account information of the intercepted print job, wherein the print account job is linked to the corresponding print job by a linking identifier.

4. System according to claim 3, wherein the server station is adapted to communicate with a client station to obtain account information of the intercepted print job for insertion in the print account job.

5. System according to any one of the preceding claims, wherein a printer server comprises said means for validating stored print jobs for printing, wherein said validating means validates a print job by generating a print validation command for a corresponding print job and submitting the print validation command to the printing device.

6. System according to any one of the preceding claims, wherein the control unit of the printing device is adapted to receive print jobs and print account jobs, wherein said validating means are part of the control unit of the printing device.

7. System according to claim 6, wherein the control unit of the printing device stores all submitted print and account jobs in a holding queue in the storage means, wherein the control unit is arranged to check stored print and account jobs in order to match linked print and account jobs, wherein in case a print job is matched with an account job the account information is checked and if the account information is valid the print job is removed from the holding queue and validated for printing and the account job is removed from the holding queue and the account information is stored in the storage means.

8. Printing device for use in a system according to any one of the preceding claims, comprising a control unit and a printer, the control unit comprising storage means for storing print jobs in a holding queue, **characterized in that** the control unit of the printing device is adapted to receive print jobs and print account jobs, wherein the control unit comprises means for validating stored print jobs for printing, wherein said validating means receives account jobs and validates a corresponding print job for printing in case a valid account job has been received.

9. Printing device according to claim 8, wherein the control unit stores all submitted print and account jobs in a holding queue in the storage means, wherein the control unit is arranged to check stored print and account jobs in order to match linked print and account jobs, wherein in case a print job is matched with an account job the account information is checked and if the account information is valid the print job is removed from the holding queue and validated for printing and the account job is removed from the holding queue and the account information is stored in the storage means.

10. Client station for use in a system according to any one of claims 17, the client station being adapted to submit print jobs, **characterized by** a job submitter including means for generating and submitting a print account job containing account information of a print job, wherein the print account job is linked to the corresponding print job by a linking identifier.

11. Server station for use in a system according to any one of claims 17, **characterised in that** the server station is adapted to intercept a submitted print job, the server station comprising means for generating and submitting a print account job containing account information of the intercepted print job, wherein the print account job is linked to the corresponding print job by a linking identifier.

12. Server station according to claim 11, and adapted to communicate with a client station to obtain account information of the intercepted print job for insertion in the print account job.

13. Printer server for use in a system according to any one of claims 17, **characterised by** means for validating stored print jobs for printing, wherein the validating means validates a print job by generating a print validation command for a corresponding print job and submitting the print validation command to a printing device.

14. A computer program comprising program instructions for allowing a computer to operate as a client station in a system of any one of claims 17 when said program runs on the computer.

15. A computer program comprising program instructions for allowing a computer to operate as a control unit of a printing device in a system of any one of claims 17 when said program runs on the computer.

16. A computer program comprising program instructions for allowing a computer to operate as a server station in a system of any one of claims 17 when said program runs on the computer.

17. A computer program comprising program instructions for allowing a computer to operate as a printer server in a system of any one of claims 17 when said program runs on the computer.
